# EUROPEAN PATENT APPLICATION

(11) **EP 4 831 311 A1**
(43) Date of publication of application: **28.10.2026**
(21) Application number: 24907993.0
(22) Date of filing: 16.12.2024
(51) Int. Cl.: C22B 3/24, C22B 26/12

(54) **LITHIUM RECOVERY SYSTEM FOR RECOVERING LITHIUM FROM LITHIUM-CONTAINING SOLUTION**

(30) Priority: 18.12.2023 KR 20230185187
(71) Applicant: POSCO Holdings Inc., Pohang-si, Gyeongsangbuk-do 37859 (KR)
(72) Inventor: KIM, Ju Young, Pohang-si, Gyeongsangbuk-do 37859 (KR); PARK, Woonkyoung, Pohang-si, Gyeongsangbuk-do 37859 (KR); YANG, Heok, Pohang-si, Gyeongsangbuk-do 37859 (KR); JUNG, Myungwon, Pohang-si, Gyeongsangbuk-do 37859 (KR); HEO, Jungho, Pohang-si, Gyeongsangbuk-do 37859 (KR); KIM, Ryutae, Pohang-si, Gyeongsangbuk-do 37859 (KR)
(74) Representative: Pfenning, Meinig & Partner mbB
(86) International application number: PCT/KR2024/020446
(87) International publication number: WO 2025/135710

(57) **Abstract**

The present disclosure relates to a continuous circulation-type lithium recovery system comprising a plurality of columns, the system comprising: an adsorption unit comprising 1 to N adsorption columns for adsorbing lithium from a lithium-containing solution; and a desorption unit comprising 1 to M desorption columns for desorbing the lithium from the adsorbate that has passed through the adsorption unit.
(wherein N is a value from 2 to 5, and M is a value from 2 to 10)

## Description

### [Technical Field]

The present disclosure relates to a lithium recovery system, and more particularly, to a system for effectively recovering lithium from a lithium-containing solution.

### [Background Art]

Lithium secondary batteries are essential components in small-sized devices such as mobile phones and notebook computers, and recently, the demand for lithium secondary batteries as power sources for hybrid vehicles, electric vehicles, and the like has been increasing.

Lithium, which is a key material for such lithium secondary batteries, is generally extracted from minerals, seawater, brine, and the like.

However, the lithium content in the earth's crust is only 0.006%, and because of its high reactivity, it is not found in nature in a pure metal form. Therefore, in order to extract it in the pure metal form, a process that requires a large amount of energy, incurs high costs, and causes environmental problems must be carried out.

In addition, although seawater is abundant worldwide, since its lithium content is at a low level of 0.17 mg/L, there is a problem that lithium extraction efficiency is low and production costs are high compared to other lithium raw materials.

The most common method of extracting lithium is to extract lithium in the form of lithium carbonate by evaporating water from brine and then adding a carbonate. However, in order to extract lithium as lithium carbonate by adding a carbonate, the lithium extraction process must be performed after concentrating the brine to an economically viable level, and there is a problem that there are not many brines worldwide that may improve the economic feasibility of lithium extraction.

Therefore, there is an urgent need to develop a lithium recovery technology that may recover lithium even from raw materials with low lithium content. Furthermore, there is growing interest in processes for recovering lithium through adsorption and desorption to recover lithium even from raw materials with low lithium content.

However, conventional single-type or series-type adsorption and desorption processes have problems in that a considerable amount of time is required for lithium recovery and that the lithium recovery rate is reduced due to structural collapse of the adsorbent.

### [Summary of Invention]

### [Technical Problem]

A lithium recovery system according to an embodiment of the present disclosure provides high process efficiency by preventing structural collapse of an adsorbent and shortening lithium recovery time.

### [Technical Solution]

In one embodiment, the lithium recovery system relates to a continuous circulation-type lithium recovery system comprising a plurality of columns, and may comprise: an adsorption unit comprising 1 to N adsorption columns for adsorbing lithium from a lithium-containing solution; and a desorption unit comprising 1 to M desorption columns for desorbing the lithium from the adsorbate that has passed through the adsorption unit.
(wherein N is from 2 to 5, and M is from 2 to 10)

In one embodiment, the plurality of adsorption columns and the plurality of desorption columns of the adsorption unit and the desorption unit may be connected in parallel, and the lithium-containing solution may continuously circulate through the plurality of columns. In one embodiment, an aluminum-based adsorbent may be introduced into the adsorption unit.

In one embodiment, a structure of lithium aluminum intercalate (Layered Double Hydroxide, LDH) in the lithium-containing solution may be maintained in the adsorption unit. In one embodiment, when the lithium-containing solution in a first adsorption column satisfies an adsorption target value, the first adsorption column may become an M-th desorption column of the desorption unit, and an N-th adsorption column may be controlled as an (N-1)-th column.

In one embodiment, when a desorption solution in the first desorption column satisfies a desorption target value, the first desorption column may become the N-th adsorption column in the adsorption unit, and the M-th desorption column may be controlled as the (M-1)-th column. In one embodiment, after the lithium-containing solution in the first adsorption column satisfies the desorption target value, the first adsorption column may be controlled as the M-th desorption column after undergoing a washing process.

In one embodiment, the initial lithium (Li) concentration of the lithium-containing solution may be 75 mg/L or more. In one embodiment, the desorption solution may pass through the first through (M-1)-th desorption columns and absorb lithium to enter the M-th desorption column.

In one embodiment, the desorption solution may increase the Li concentration in the M-th desorption column. In one embodiment, when the desorption solution in the first desorption column satisfies the desorption target value, the first adsorption column in the adsorption unit may be controlled as the M-th desorption column.

In one embodiment, the desorption unit may have a desorption amount of the desorption solution of 10 BV to 20 BV. In one embodiment, a lithium concentration of the desorption unit may be 0.10 g/L to 0.30 g/L. In one embodiment, the adsorption target value may be met when at least one of the following conditions is satisfied: a case where a pH of the lithium-containing solution is 4.5 to 9.0; a case where an electrical conductivity of the lithium desorption solution is 1 mS/cm to 10 mS/cm; and a case where a lithium concentration of the lithium desorption solution is 0.1 g/L to 3 g/L.

### [Advantageous Effects]

A lithium recovery system according to an embodiment of the present disclosure comprises a plurality of columns, and by performing continuous circulation through the plurality of columns, prevents structural collapse of an adsorbent and shortens the time for lithium recovery, thereby providing a lithium recovery system with high process efficiency.

### [Brief Description of Drawings]

FIGS. 1A and 1B are schematic diagrams illustrating a method for operating a lithium recovery system according to an embodiment of the present disclosure.
FIGS. 2a and 2b show Li concentrations after adsorption according to bed volume (BV) in an adsorption unit.
FIG. 3 shows the lithium concentration according to the BV of the desorption solution for each desorption flow rate.
FIGS. 4A and 4B show Li concentration versus desorption amount according to the number of desorption columns in the Examples and Comparative Examples of the present disclosure.

### [Detailed Description]

Hereinafter, various embodiments of the present disclosure will be described in detail with reference to the accompanying drawings so that those of ordinary skill in the art to which the present disclosure pertains may easily implement the same. The present disclosure may be implemented in various different forms and is not limited to the embodiments described herein.

In order to clearly describe the present disclosure, parts irrelevant to the description are omitted, and the same or similar components are given the same reference numerals throughout the specification.

In addition, since the size and thickness of each configuration shown in the drawings are arbitrarily illustrated for convenience of description, the present disclosure is not necessarily limited to what is illustrated.

In addition, throughout the specification, when a part is said to "include" or "comprise" a certain component, it means that the part may further include other components rather than excluding other components, unless specifically stated to the contrary.

In the drawings, thicknesses are exaggerated for clarity of expression of various layers and regions. Throughout the specification, similar parts are given the same reference numerals. When a part such as a layer, film, region, or plate is said to be "on" another part, this includes not only the case where it is "directly on" the other part but also the case where another part is present therebetween. Conversely, when a part is said to be "directly on" another part, it means that there is no other part in between.

Then, a method for recovering lithium from a lithium-containing solution according to an embodiment will be described below.

According to an embodiment of the present disclosure, a lithium recovery system may be a continuous circulation-type lithium recovery system comprising a plurality of columns. Specifically, the system may comprise an adsorption unit comprising a plurality of adsorption columns and a desorption unit comprising a plurality of desorption columns. The plurality of adsorption columns of the adsorption unit and the plurality of desorption columns of the desorption unit may be connected in parallel. As the plurality of adsorption columns and the plurality of desorption columns are connected in parallel, it may be confirmed that the process time is shortened and the effect is excellent compared to a case where the same amount of solution is introduced into a single column.

Specifically, that the columns are connected in parallel means that when a plurality of adsorption columns are in the adsorption stage, a plurality of other columns proceed with desorption, thereby performing a continuous adsorption-desorption process.

In one embodiment, the lithium-containing solution may be a material containing lithium, such as brine extracted from a salt lake. For example, it may be brine extracted from South America or may be artificially prepared brine. The lithium-containing solution may be supplied to an adsorption unit after being supplied to a separately prepared container, or may be directly supplied to the adsorption unit.

In one embodiment, the adsorption unit may comprise a plurality of adsorption columns for adsorbing lithium from the lithium-containing solution. The adsorption unit may comprise an adsorbent to extract lithium from the lithium-containing solution. In one embodiment, the adsorbent may comprise an aluminum-based adsorbent. For example, the adsorbent may be a [LiX]₀₋₁[Al(OH)₃]₂ (lithium aluminum intercalate, LDH) compound. In the adsorbent, lithium may be adsorbed as a solution containing lithium is introduced into the adsorbent such that LiCl inside the adsorbent is released therefrom.

In one embodiment, the adsorption unit may comprise 1 to N adsorption columns. In this case, N may have a value of 2 or more and 5 or less. N may be 2 or more and 4 or less, and more specifically, 2 or more and 3 or less. Since the adsorption unit comprises 1 to N adsorption columns, the adsorption is performed while maintaining the lithium aluminum intercalate structure of the adsorbent contained in the adsorption unit, so that the Li concentration may be increased.

If N, which is the number of adsorption columns of the adsorption unit, exceeds the upper limit value, the number of columns for lithium production increases, so there may be a problem that excessive capital investment is required. If N falls below the lower limit value, there may be a problem that productivity deteriorates because lithium may not be sufficiently recovered or the adsorption capacity of the adsorbent for adsorbing lithium may not be sufficiently used.

In one embodiment, a desorption unit may desorb lithium from an adsorbate that has passed through an adsorption unit. Specifically, the desorption unit may recover lithium by controlling the lithium adsorbed on the adsorbate to be desorbed. More specifically, the desorption unit may desorb lithium by a method of introducing a low-concentration lithium solution and diffusing the lithium adsorbed on an adsorbent into the low-concentration lithium solution, and may recover the desorbed lithium by a method of concentrating, purifying, and converting the desorbed lithium into lithium carbonate or lithium hydroxide.

In one embodiment, the desorption unit may comprise 1 to M desorption columns for desorbing the lithium from the adsorbate that has passed through the adsorption unit. The adsorbate may be an adsorbent on which lithium is adsorbed. In this case, M may be 2 or more and 10 or less. Specifically, the M may be 2 or more and 5 or less, and more specifically, 2 or more and 4 or less. Since the desorption unit comprises a plurality of desorption columns in the above-described range, the efficiency of the process may be increased by reducing the time required for lithium desorption.

In one embodiment, if M, which is the number of desorption columns of the desorption unit, exceeds the upper limit value, the number of lithium desorption columns increases, requiring excessive capital investment and leading to a problem of deteriorating economic feasibility. If M is less than the lower limit value, sufficient desorption of lithium may not be achieved, the adsorption capacity may be reduced in the step of adsorbing lithium onto the column after desorption, and as a result, productivity of the overall system may be deteriorated.

In one embodiment, when the lithium-containing solution in the first adsorption column satisfies the adsorption target value, the first adsorption column becomes the M-th desorption column of the desorption unit, and the N-th adsorption column may be controlled as the (N-1)-th column. Specifically, when the lithium-containing solution in the first adsorption column satisfies the adsorption target value, the first adsorption column is controlled by a member such as a separately connected valve and is changed from an adsorption column to a desorption column.

Specifically, when adsorption of the lithium-containing solution in the first adsorption column reaches a target adsorption value, the first adsorption column may be switched to a desorption column to desorb lithium from the adsorbate, thereby performing continuous operation.

In one embodiment, the adsorption target value may correspond to a case where at least one of the following conditions is satisfied: the pH of the lithium-containing solution is 4.5 to 9.0; the electrical conductivity of the lithium desorption solution is 1 mS/cm to 10 mS/cm; and a lithium concentration of the lithium desorption solution is 0.1 g/L to 3 g/L.

Specifically, when the pH of the lithium-containing solution exceeds the upper limit value of the above-described range or when the pH of the lithium-containing solution is less than the lower limit value of the above-described range, there is a problem that the LDH structure of the adsorbent may not be maintained.

When the electrical conductivity of the lithium desorption solution exceeds the upper limit value of the above-described range, there is a problem that the adsorbed lithium may not be desorbed or the desorption rate may become very slow. When the electrical conductivity of the lithium-containing solution is less than the lower limit value of the above-described range, there is a problem that the LDH structure of the adsorbent may collapse.

In one embodiment, when the lithium concentration of the desorption-containing solution exceeds the upper limit value of the above-described range, there is a problem in that the adsorbed lithium may not be desorbed or the desorption rate is excessively lowered. When the lithium concentration of the lithium-containing solution is less than the lower limit value of the above-described range, there is a problem in that the LDH structure of the adsorbent may collapse.

As described above, when at least one of the pH, electrical conductivity, and lithium concentration of the lithium-containing solution satisfies the aforementioned range, it is determined that adsorption is completed according to the adsorption target value, and control may be performed to change the first adsorption column to a desorption column. At this time, the first adsorption column that has reached the adsorption target value is changed to an M-th desorption column, and the second adsorption column, the third adsorption column, ..., and the N-th adsorption column may be controlled to be changed to the first adsorption column, the second adsorption column, ..., and the (N-1)-th adsorption column, respectively.

In one embodiment, when the lithium-containing solution in the first adsorption column reaches the desorption target value, the first adsorption column may be operated as the M-th desorption column after undergoing a washing process. The washing process may be equally applied to a desorption column.

In one embodiment, when a desorption solution in a first desorption column satisfies a desorption target value, the first desorption column may become an N-th adsorption column in an adsorption unit, and an M-th desorption column may be controlled as an (M-1)-th column. Specifically, when the desorption solution in the first desorption column satisfies the desorption target value, the first desorption column may be controlled by a member such as a separately connected valve and may be changed from a desorption column to an adsorption column.

Specifically, when the desorption solution in the first desorption column achieves the desorption target value, the first desorption column may be switched to an adsorption column to proceed with readsorption of the desorbed material, thereby performing continuous operation.

As such, when the desorption solution reaches the desorption target value, it is determined that desorption has been performed to an appropriate level, and the first desorption column is controlled to be changed to an adsorption column in order to further increase the concentration of lithium in the desorption solution. At this time, the first desorption column that has reached the desorption target value is changed to an N-th adsorption column, and the second desorption column, the third desorption column, ..., and the M-th desorption column are controlled to be changed to the first desorption column, the second desorption column, ..., and the (N-1)-th desorption column, respectively.

Accordingly, the first adsorption column that has reached the adsorption target value is changed to the M-th desorption column, and the first adsorption column that has reached the desorption target value is changed to the N-th adsorption column, and as the above-described process is continuously performed, lithium may be recovered in a short period of time, so that process efficiency may be increased.

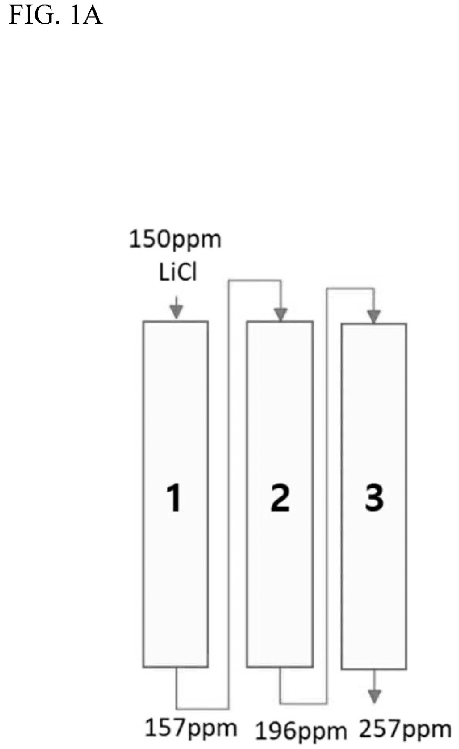

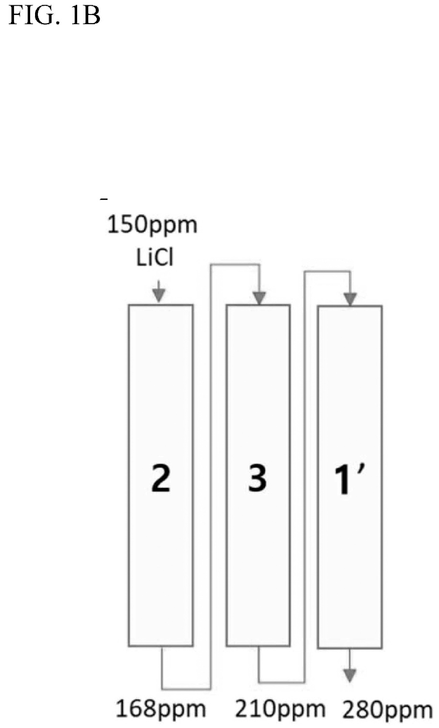

In one embodiment, a desorption solution may pass through the first to (M-1)-th desorption columns and absorb lithium. In one embodiment, the desorption solution that has passed through the first to (M-1)-th desorption columns may increase the lithium concentration in the M-th desorption column. A detailed description thereof will be given below with reference to FIGS. 1A and 1B.

FIGS. 1A and 1B are schematic diagrams of an operating method for a lithium recovery system according to an embodiment of the present disclosure.

FIG. 1A illustrates an adsorbate that has passed through an adsorption unit entering a plurality of desorption columns of a desorption unit in a lithium recovery system according to one embodiment of the present disclosure. For example, when the desorption unit consists of first, second, and third desorption columns, desorption water containing LiCl sequentially passes through the first desorption column and the second desorption column, and after absorbing a portion of lithium in the first desorption column and the second desorption column, the desorption water may enter the third desorption column.

FIG. 1B shows that, in the lithium recovery system according to an embodiment of the present disclosure, when desorption is completed in the first desorption column, the columns that performed the roles of the second desorption column and the third desorption column in FIG. 1A perform the roles of the first desorption column and the second desorption column. Thereafter, the first adsorption column for which adsorption has been completed in the adsorption unit may be controlled to perform the role of the third desorption column in FIG. 1A to increase the lithium concentration of the desorption water. As such, since the adsorption columns and desorption columns continuously perform adsorption and desorption of lithium, the lithium recovery rate may be increased and the process time may be shortened, thereby increasing efficiency.

In one embodiment, a desorption amount of the desorption solution in the desorption unit may be 10 BV to 40 BV (Bed Volume). Specifically, the desorption amount may be 10 BV to 20 BV. The BV may refer to a packing volume of the adsorption/desorption column. When the desorption amount of the desorption solution satisfies the above-described range, there is an advantage in that the effect of increasing the process speed, which is exhibited by including a plurality of desorption columns, is achieved.

When the desorption amount of the desorption solution exceeds the upper limit value of the above-described range, the time required for desorption may be excessively consumed, so that lithium extraction productivity may be deteriorated. When the desorption amount of the desorption solution is less than the lower limit value of the above-described range, sufficient lithium may not be desorbed, so there may be a problem that sufficient lithium may not be adsorbed in an adsorption step after desorption.

In one embodiment, the initial lithium concentration of the lithium-containing solution may be 75 mg/L or more. In one embodiment, the lithium concentration in the desorption unit may be 0.15 g/L to 3 g/L. Specifically, the lithium concentration in the desorption unit may be 0.15 g/L to 2 g/L, and more specifically, the lithium concentration in the desorption unit may be 0.12 g/L to 0.18 g/L. When the lithium concentration in the desorption unit falls below the lower limit of the aforementioned range, there is a problem in that the structure of the adsorbent collapses.

In one embodiment, the reactant that has passed through the above-described desorption unit may be discharged through a discharge unit (not shown) or may be returned to the above-described adsorption unit for reuse. As such, according to an embodiment of the present disclosure, the lithium recovery system may proceed in a manner in which adsorption and desorption of lithium ions are continuously performed.

Hereinafter, preferred embodiments of the present disclosure and experimental examples corresponding thereto will be described. However, the following examples are merely preferred embodiments of the present disclosure, and the present disclosure is not limited to the following examples.

### Experimental Example

### <Comparative Example>

### Preparation of Lithium-Containing Solution

A brine having the composition as shown in Table 1 below was prepared.

**[Table 1]**

| Category | Li | Na | K | B | Cl |
|---|---|---|---|---|---|
| Content (g/L) | 0.72 | 78.54 | 6.51 | 1.01 | Bal. |

### Adsorption Unit

The lithium-containing solution was introduced at a flow rate of 0.1 BV/min into a first adsorption column and a second adsorption column, which were connected in parallel and filled with adsorbent powder, and an adsorption process was performed. In the adsorption unit, a plurality of adsorption columns, specifically two, were configured in a parallel system.

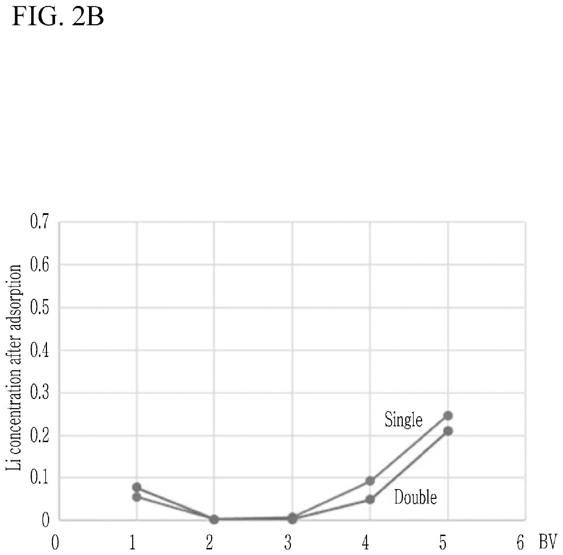

FIG. 2B shows Li concentration after adsorption according to bed volume (BV) in the adsorption unit.

In this case, a [LiX]₀₋₁[Al(OH)₃]₂ (lithium aluminum intercalate, LDH) compound was used as the adsorbent powder. X is an anion (e.g., Cl⁻, SO₄²⁻, PO₄²⁻, etc.).

The adsorbent powder comprises aluminum hydroxide having a two-dimensional layered structure to facilitate the insertion of anions between layers, and positively charged lithium cations diffuse into hexagonal cavities formed in the two-dimensional layered structure that easily accommodates the size of lithium.

Specifically, LiCl inside the adsorbent powder may escape from the structure at a certain ratio without being accompanied by a change in the structure of the adsorbent powder. When the adsorbent powder in a state in which the LiCl has escaped therefrom comes into contact with a lithium solution having a high salt concentration and containing LiCl, the adsorbent powder fills the sites from which the LiCl has escaped at a high rate.

When the adsorbent in a state from which LiCl has been desorbed is in contact with a lithium solution having a high salt concentration and containing LiCl to fill sites from which the LiCl was desorbed, the degree to which the vacant sites are filled increases as the LiCl concentration of the lithium solution increases and as the salt concentration thereof increases.

When the adsorbent comes into contact with water having a low salt concentration and a low LiCl concentration, LiCl inside the adsorbent leaches out, and the degree to which LiCl leaches out is inversely proportional to the salt concentration and the LiCl concentration. In this case, when in contact with water having an extremely low salt concentration and LiCl concentration, the LiCl of the adsorbent excessively leaches out, and the lithium aluminum intercalate structure of the adsorbent may collapse. It may be confirmed that the adsorbent whose structure has collapsed is regenerated into the lithium aluminum intercalate structure while absorbing LiCl when in contact with a high-concentration LiCl solution, and this rate is slower than a rate at which the lithium aluminum intercalate structure of a normal structure absorbs LiCl.

As such, in order to increase the rate of raw brine introduced into the column part of the adsorption unit to which the adsorbent is added, the rate at which LiCl in the brine is absorbed by the adsorbent must be increased; while a high rate may be expected when the structure of the adsorbent is maintained, a high rate may not be expected when the LiCl in the adsorbent is excessively extracted and the structure is modified. Therefore, in the adsorption unit, the adsorbent must maintain the lithium aluminum intercalate structure and secure appropriate LiCl vacant spaces.

The adsorption unit was configured with a single adsorption column, specifically, one adsorption column.

When LiCl is absorbed into the lithium aluminum intercalate structure in the adsorption unit, after LiCl is absorbed at a level of about 60% of the maximum capacity, some of the LiCl in the brine may not be absorbed, and as the LiCl absorption amount increases, the amount of residual LiCl in the brine increases. As such, in order to increase the lithium recovery rate, the residual LiCl must be introduced into another column in the adsorption unit to absorb the residual LiCl. To this end, as in the above embodiment, two or more parallel systems are required. Even if a parallel system is configured, when the lithium aluminum intercalate structure of the adsorbent is modified, the recovery rate of the residual LiCl is significantly reduced.

### <Example>

### Preparation of a lithium-containing solution

A brine having the composition shown in Table 2 below was prepared.

**[Table 2]**

| Category | Li | Na | K | B | Cl |
|---|---|---|---|---|---|
| Content (g/L) | 0.3 | 73 | 24 | 0.5 | Bal. |

### Adsorption Unit

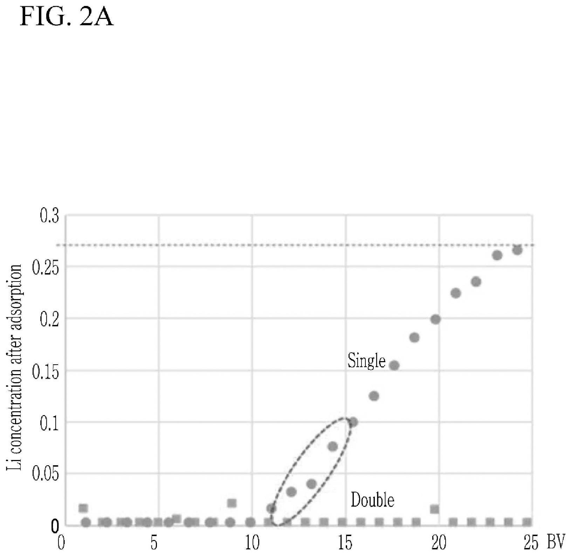

The lithium-containing solution was introduced at a flow rate of 0.1 BV/min into a first adsorption column and a second adsorption column which were connected in parallel and packed with adsorbent powder, and an adsorption process was performed. Here, a [LiX]₀₋₁[Al(OH)₃]₂ (lithium aluminum intercalate, LDH) compound was used as the adsorbent powder. X is an anion (e.g., Cl⁻, SO₄²⁻, PO₄²⁻, etc.). FIG. 2A shows the lithium concentration after adsorption according to the bed volume (BV) in the adsorption unit.

In this case, a [LiX]₀₋₁[Al(OH)₃]₂ (lithium aluminum intercalate, LDH) compound was used as the adsorbent powder. X is an anion (e.g., Cl⁻, SO₄²⁻, PO₄²⁻, etc.).

The adsorbent powder comprises aluminum hydroxide having a two-dimensional layered structure to facilitate the insertion of anions between layers, and positively charged lithium cations diffuse into hexagonal cavities formed in the two-dimensional layered structure that easily accommodates the size of lithium.

Specifically, LiCl inside the adsorbent powder may exit the structure at a certain ratio without being accompanied by a change in the structure of the adsorbent powder. When the adsorbent powder in a state in which the LiCl has escaped therefrom comes into contact with a lithium solution having a high salt concentration and containing LiCl, the adsorbent powder fills the sites from which the LiCl has escaped at a high rate.

When the adsorbent in a state from which the LiCl has been desorbed is in contact with a lithium solution containing LiCl and having a high salt concentration to fill sites from which the LiCl was desorbed, the degree to which the vacant sites are filled is higher as the LiCl concentration and the salt concentration of the lithium solution are higher.

When the adsorbent comes into contact with water having a low salt concentration and a low LiCl concentration, LiCl inside the adsorbent leaches out, and the degree to which LiCl leaches out is inversely proportional to the salt concentration and the LiCl concentration. In this case, when in contact with water having an extremely low salt concentration and LiCl concentration, the LiCl of the adsorbent excessively leaches out, and the lithium aluminum intercalate structure of the adsorbent may collapse. It may be confirmed that the adsorbent whose structure has collapsed is regenerated into the lithium aluminum intercalate structure while absorbing LiCl when in contact with a high-concentration LiCl solution, and this rate is slower than a rate at which the lithium aluminum intercalate structure of a normal structure absorbs LiCl.

As such, in order to increase the rate of raw brine introduced into the column part of the adsorption unit to which the adsorbent is added, the rate at which LiCl in the brine is absorbed by the adsorbent must be increased; while a high rate may be expected when the structure of the adsorbent is maintained, a high rate may not be expected when the LiCl in the adsorbent is excessively extracted and the structure is modified. Therefore, in the adsorption unit, the adsorbent must maintain the lithium aluminum intercalate structure and secure appropriate LiCl vacant spaces.

The adsorption unit was configured with a single adsorption column, specifically, one adsorption column.

When LiCl is absorbed into the lithium aluminum intercalate structure in the adsorption unit, after LiCl is absorbed at a level of about 60% of the maximum capacity, some of the LiCl in the brine may not be absorbed, and as the LiCl absorption amount increases, the amount of residual LiCl in the brine increases. As such, in order to increase the lithium recovery rate, the residual LiCl must be introduced into another column in the adsorption unit to absorb the residual LiCl. To this end, as in the above embodiment, two or more parallel systems are required. Even if a parallel system is configured, when the lithium aluminum intercalate structure of the adsorbent is modified, the recovery rate of the residual LiCl is significantly reduced.

As such, when a plurality of adsorption columns are arranged in parallel in an adsorption unit as in the Example, modification of the lithium aluminum intercalate structure of an adsorbent may be minimized and simultaneously the recovery rate of residual lithium may be increased. On the other hand, when a single adsorption column is used as in the Comparative Example, modification of the lithium aluminum intercalate structure may be caused and a problem in that the recovery rate of residual LiCl is lowered may occur.

### Desorption Unit

In order to maintain the lithium aluminum intercalate structure of the adsorbent and allow LiCl to be desorbed, a process of sequentially lowering the LiCl concentration of the water in contact with the adsorbent is required; according to experimental results, in this process, when desorption water having a lithium concentration of about 150 ppm is introduced into an adsorbent column in an amount of about 30 BV, the concentration of the LiCl solution extracted depending on the input amount sequentially decreases and consequently reaches 150 ppm, which is equal to the concentration of the introduced desorption water.

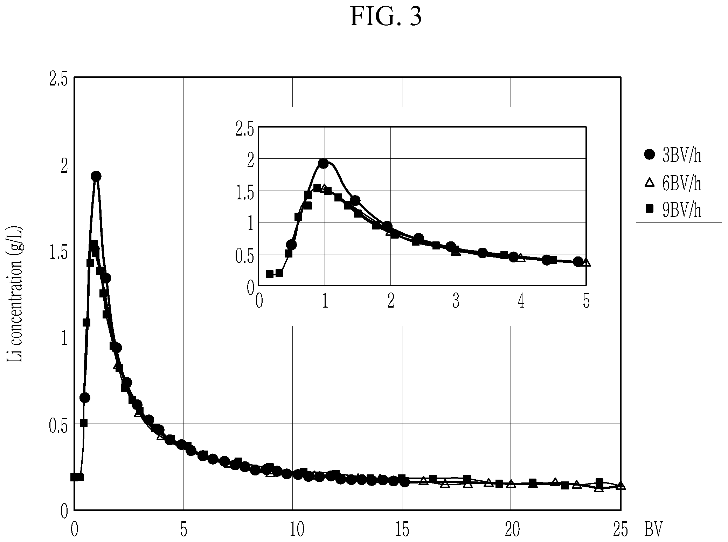

FIG. 3 shows the lithium concentration according to the BV of the desorption solution for each desorption flow rate.

FIG. 3 shows the lithium concentration according to the BV of a desorption solution in a single column. It was confirmed that even if the rate of the desorption solution in a single column is different, the lithium concentration remains at a similar value. Accordingly, it was confirmed that the input rate of desorption water is not a major factor in controlling the lithium concentration. However, when the input rate of desorption water is excessively high, there is a problem in that excessive pressure is applied to an adsorbent in the column; thus, the input rate may not be excessively increased, and it was confirmed that about 90 BV/hr is the maximum input rate.

### <Example>

A plurality of desorption columns of the desorption unit, specifically three desorption columns, are arranged in a parallel system.

### <Comparative Example>

A single desorption column, specifically one desorption column, is disposed in the desorption unit.

Referring to the Examples and the Comparative Examples, it was confirmed that in the process of returning the lithium aluminum intercalate structure to a state suitable for adsorption in the desorption unit, the concentration of LiCl must be sequentially lowered around the adsorbent, and at this time, since the introduced desorption water requires a flow rate of about 30 BV, the desorption time may be drastically shortened by arranging a plurality of desorption columns in the desorption unit and arranging them in parallel.

Specifically, as in the Example, when a desorption unit comprising three desorption columns is configured in parallel, since a flow rate of about 10 BV is required per column, it was confirmed that the time is reduced to 1/3 compared to a single desorption column and that as the number of desorption columns increases to n, the time is reduced to 1/n. However, it was confirmed that if the number of desorption columns increases excessively, the volume of the adsorbent in the configuration increases, which may adversely affect productivity; thus, it was confirmed that including three desorption columns is appropriate.

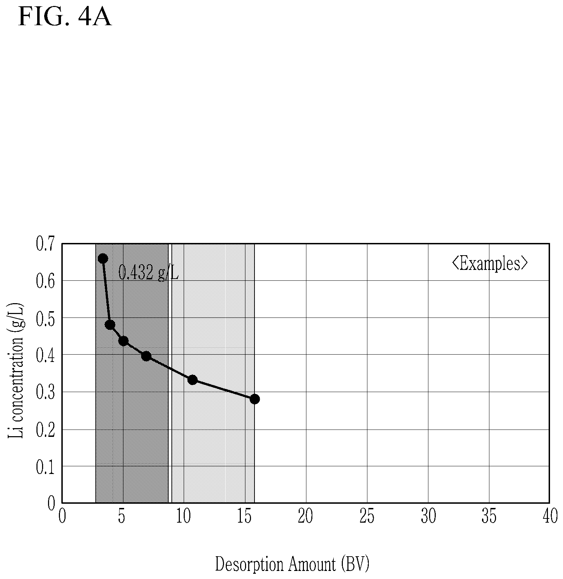

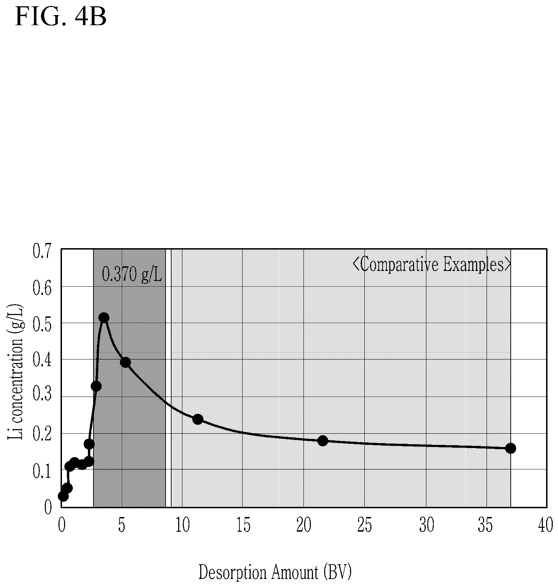

FIGS. 4A and 4B show lithium concentration versus desorption amount according to the number of desorption columns for Examples and Comparative Examples of the present disclosure.

FIGS. 4A and 4B show lithium concentration according to the desorption amount (BV) for an Example having three desorption columns and a Comparative Example having one desorption column, respectively. Referring to FIGS. 4A and 4B, after the adsorption unit, in which adsorption of the solution was completed, was subjected to a washing process by adding NaCl at 0 to 2 BV, 0.15 g/L of LiCl was added to compare the concentration of lithium according to the desorption amount.

Tables 3 and 4 below show the lithium concentrations according to the desorption amount, specifically, the bed volume, of the Examples and the Comparative Examples.

**[Table 3]**

| | | | | | | |
|---|---|---|---|---|---|---|
| Desorption | 3.317 | 3.951 | 4.902 | 6.804 | 10.608 | 15.68 |
| amount (BV) | | | | | | |
| Li concentration (g/L) | 0.659 | 0.483 | 0.439 | 0.395 | 0.324 | 0.2809 |

**[Table 4]**

| | | | | | | | | | | | | | |
|---|---|---|---|---|---|---|---|---|---|---|---|---|---|
| Desorption amount (BV) | 0.144 | 0.433 | 0.722 | 1.01 | 1.588 | 2.165 | 2.294 | 2.81 | 3.455 | 5.261 | 11.195 | 21.515 | 36.995 |
| Li concentration (g/L) | 0.03 | 0.048 | 0.11 | 0.12 | 0.113 | 0.122 | 0.17 | 0.328 | 0.513 | 0.393 | 0.236 | 0.179 | 0.16 |

Referring to FIGS. 4A and 4B and Tables 3 and 4, based on the Example, about 15 mg of Li was required per 1 BV of desorption water; the Example including three desorption columns was sufficient with about 16 BV, whereas the Comparative Example including one desorption column required about 37 BV. Accordingly, it was confirmed that the Example including a plurality of desorption columns, specifically about three, reduced the process duration of the desorption unit by about 57% as compared with the Comparative Example including a single desorption column, thereby increasing process efficiency.

The present disclosure is not limited to the embodiments described above but may be manufactured in various different forms, and those of ordinary skill in the art to which the present disclosure pertains will understand that the present disclosure may be implemented in other specific forms without changing the technical spirit or essential features of the present disclosure. Therefore, it should be understood that the embodiments described above are illustrative in all respects and not restrictive.

## Claims

1. A continuous circulation-type lithium recovery system comprising a plurality of columns, the lithium recovery system comprising: an adsorption unit comprising 1 to N adsorption columns for adsorbing lithium from a lithium-containing solution; and a desorption unit comprising 1 to M desorption columns for desorbing the lithium from an adsorbent that has passed through the adsorption unit.
(wherein N is a value from 2 to 5, and M is a value from 2 to 10).

2. The lithium recovery system of claim 1, wherein the plurality of adsorption columns and the plurality of desorption columns of the adsorption unit and the desorption unit are connected in parallel, and the lithium-containing solution continuously circulates through the plurality of columns.

3. The lithium recovery system of claim 1, wherein an aluminum-based adsorbent is introduced into the adsorption unit.

4. The lithium recovery system of claim 1, wherein the structure of the lithium aluminum intercalate (Layered Double Hydroxide, LDH) in the lithium-containing solution is maintained in the adsorption unit and the desorption unit.

5. The lithium recovery system of claim 1, wherein when the lithium-containing solution in the first adsorption column satisfies an adsorption target value, the first adsorption column becomes the M-th desorption column of the desorption unit, and the N-th adsorption column is controlled as the (N-1)-th column.

6. The lithium recovery system of claim 1, wherein when the desorption solution in the first desorption column satisfies a desorption target value, the first desorption column becomes the N-th adsorption column in the adsorption unit, and the M-th desorption column is controlled as the (M-1)-th column.

7. The lithium recovery system of claim 1, wherein after the lithium-containing solution in the first adsorption column satisfies a desorption target value, the first adsorption column is controlled as the M-th desorption column after undergoing a washing process.

8. The lithium recovery system of claim 1, wherein the initial lithium (Li) concentration of the lithium-containing solution is 75 mg/L or more.

9. The lithium recovery system according to claim 7, wherein the desorption solution passes through the first to (M-1)-th desorption columns and absorbs lithium to enter the M-th desorption column.

10. The lithium recovery system according to claim 7, wherein the desorption solution is configured to increase the lithium concentration in the M-th desorption column.

11. The lithium recovery system of claim 10, wherein when the desorption solution in the first desorption column satisfies the desorption target value, the first adsorption column in the adsorption unit is controlled as the M-th desorption column.

12. The lithium recovery system of claim 1, wherein the desorption unit has a desorption amount of a desorption solution of 10 to 40 BV.

13. The lithium recovery system of claim 12, wherein the lithium concentration of the desorption unit is 0.10 to 3.0 g/L.

14. The lithium recovery system of claim 5, wherein the adsorption target value defines a case where at least one of the following is satisfied: the pH of the lithium-containing solution is 4.5 to 9; the electrical conductivity of the lithium-containing solution is 1 to 10 mS/cm; and the Li concentration of the lithium-containing solution is 0.1 to 3 g/L.
